# EUROPÄISCHE PATENTSCHRIFT

(11) **EP 4 121 897 B1**
(45) Veröffentlichungstag und Bekanntmachung des Hinweises auf die Patenterteilung: **28.02.2024**
(21) Anmeldenummer: 21728460.3
(22) Anmeldetag: 14.05.2021
(51) Int. Cl.: G06F 18/214, G06F 18/21, G06T 7/00

(54) **VERFAHREN UND SYSTEME ZUM BEREITSTELLEN VON SYNTHETISCHEN GELABELTEN TRAININGSDATENSÄTZEN UND IHRE ANWENDUNGEN**
METHOD AND SYSTEMS FOR PROVIDING SYNTHETIC LABELLED TRAINING DATA SETS AND USE OF SAME
PROCÉDÉS ET SYSTÈMES DE FOURNITURE DES ENSEMBLES DE DONNÉES D'APPRENTISSAGE LABELLISÉS SYNTHÉTIQUES ET LEURS APPLICATIONS

(30) Priorität: 27.05.2020 EP 20176860
(43) Veröffentlichungstag der Anmeldung: 25.01.2023
(73) Patentinhaber: Siemens Aktiengesellschaft, 80333 München (DE)
(72) Erfinder: HERGENRÖDER, Simon, 91058 Erlangen (DE); METZNER, Maximilian, 96049 Bamberg (DE); WEISSERT, Sören, 73430 Aalen (DE)
(74) Vertreter: Siemens Patent Attorneys
(86) Internationale Anmeldenummer: PCT/EP2021/062809
(87) Internationale Veröffentlichungsnummer: WO 2021/239476

(56) Entgegenhaltungen:
- EP-A1- 3 495 771
- WO-A1-2019/020791
- US-A1- 2019 042 940

## Beschreibung

Die Erfindung betrifft ein computerimplementiertes Verfahren zum Bereitstellen eines gelabelten Trainingsdatensatzes, welcher elektronische Bauelemente betrifft. Außerdem betrifft die Erfindung ein System zum Bereitstellen eines solchen Trainingsdatensatzes.

Darüber hinaus betrifft die Erfindung ein computerimplementiertes Verfahren zum Bereitstellen einer trainierten Funktion, welche auf dem vorgenannten Trainingsdatensatz trainiert wird, und ein computerimplementiertes Bilderkennungsverfahren, welches eine solche trainierte Funktion verwendet.

Ferner betrifft die Erfindung ein System zur Bilderkennung umfassend eine Bildaufnahmevorrichtung und ein Datenverarbeitungssystem, welches dazu ausgebildet und konfiguriert ist, das vorgenannte Bilderkennungsverfahren auszuführen.

Des Weiteren betrifft die Erfindung ein Computerprogramm, umfassend erste Befehle, die bewirken, dass das vorgenannte System das Verfahren zum Bereitstellen eines gelabelten Trainingsdatensatzes ausführt,
und/oder zweite Befehle, die bei der Ausführung des Programms durch einen Computer diesen veranlassen, das vorgenannte computerimplementiertes Verfahren zum Bereitstellen einer trainierten Funktion auszuführen,
und/oder dritte Befehle, die bewirken, dass das vorgenannte System zur Bilderkennung das vorgenannte Bilderkennungsverfahren ausführt.

Erstellung von gelabelten Datensätzen ist ein bekanntes Problem. Um Funktionen bzw. KI-Algorithmen, beispielsweise neuronale Netze für Bild- oder Objekterkennungsanwendungen zu trainieren, sind oft große gelabelte Datensätze notwendig.

Besonders in dem industriellen Umfeld ist eine ausgeglichene Datenbasis nur schwer generierbar (gleiches Verhältnis von Gut- und Schlechtdaten). Absichtliches Erzeugen von Fehlern ist mit weiterem Zeitaufwand verbunden. Außerdem lassen sich unvorhergesehene Umgebungseinflüsse nur bedingt mit im Datensatz abbilden.

Ein möglicher Ansatz die gelabelten Datensätze zu erzeugen, das Labeling manuell durchzuführen. Manuelles Labeling (z.B. bei Google) ist enorm zeitintensiv und teuer. Außerdem passieren bei manuellem, menschlichem Labeling Fehler durch Unkonzentriertheit und Monotonie. Labeling im technischen Bereich erfordert Fachwissen über Bauteile und Prozesse und ist dementsprechend noch teurer.

Aus WO 2019/020791 A1 (SIEMENS AG [DE]) 31. Januar 2019 sind ein computerimplementiertes Verfahren und eine Vorrichtung zum automatischen Generieren von gekennzeichneten Bilddaten und eine Analysevorrichtung zum Überprüfen eines Bauteils anhand von Konstruktionsdaten für die Bauteile bekannt.

Die Aufgabe der vorliegenden Erfindung kann somit darin gesehen werden, Verfahren und Systeme bereitzustellen, welche eine Erstellung von beliebig großen gelabelten Datensätzen bei einem geringen Zeit- und Kostenaufwand ermöglichen.

Die Aufgabe wird mit einem eingangs genannten computerimplementierten Verfahren zum Bereitstellen eines gelabelten Trainingsdatensatzes gemäß Anspruch 1 gelöst.

Durch Verwendung des erfindungsgemäßen Verfahrens fällt der Aufwand des manuellen Labelings weg und ermöglicht ein fehlerfreies und schnelles Erstellen großer gelabelter Datensätze.

Das Labeling basierend auf dem CAD-Modell erfolgt vorzugsweise automatisch.

Das CAD-Modell des (Gesamt-) Objekts elektronische Baugruppe beinhaltet also die Informationen über die Koordinaten der einzelnen Teilobjekte (das heisst der elektronischen Bauelemente) und vorzugsweise zusätzlich ihre (der Teilobjekte) Beziehungen zueinander. Durch die Koordinaten der einzelnen Teilobjekte kann ihre Position in dem Gesamtobjekt bestimmt werden. Mit dem wie oben beschrieben gelabelten Trainingsdatensatz wird auch eine Funktion für ein Bilderkennungsverfahren trainiert, mit welcher geprüft werden kann, ob richtige reale Teilobjekte eines realen (Gesamt-)Objekts an den richtigen Positionen sind.

Im Zusammenhang mit der vorliegenden Erfindung wird unter dem Begriff "Renderbild" beispielsweise eine mittels einer Vorausberechnung am Computer erzeugte virtuelle (wirklichkeitsnahe) dreidimensionale Darstellung eines Objekts verstanden.

Das vorgenannte CAD-Modell kann zwei- oder dreidimensional sein (2D oder 3D). Dabei kann als eine Vielzahl von Teilobjekten umfassendes Objekt eine (anwendungsfallbezogene) Szene beziehungsweise eine Umgebung fungieren. Unter anwendungsfallbezogener Umgebung/Szene wird hier jene Szene/Umgebung verstanden, die für den gewählten Anwendungsfall relevante Teilobjekte enthält. Beispielsweise aber nicht erfindungsgemäss kann bei Industrieanlagenbau (Beispiel eines Anwendungsfalls) das Objekt die ganze Industrieanlage sein, wobei die Teilobjekte Bereiche der Industrieanlage sein können. Bei Automobilproduktion kann das Objekt beispielsweise eine Karosserie sein, wobei die Teilobjekte Karosserieteile sein können. Im Bereich des autonomen Fahrens, beispielsweise von Zügen, kann das Objekt z.B. eine Umgebung sein, die typischerweise aus dem Cockpit eines Lokführers zu sehen ist oder sich im Sichtfeld eines Lockführers befinden, wobei die Teilobjekte ein Armaturen-/Instrumentenbrett, im Vorfeld befindliche Signalsysteme, z.B. H/V-Signalsysteme etc.

Je nach Detailierungsgrad des CAD-Modells können die Teilobjekte weitere Teil-Teilobjekte umfassen.

Es ist auch denkbar, dass zwei, drei, vier, fünf, sechs oder alle Teilobjekte ausgewählt werden, sodass die ausgewählten Teilobjekte beispielsweise die ganze durch das Objekt dargestellte Szene bilden. Dadurch können (gelabelte) Trainingsdatensätze erzeugt werden, mit welchen, wie nachstehend erörtert wird, eine Funktion zur Klassifizierung von Bildern als Ganzes trainiert werden kann. Die Klassifizierung kann dabei eine Gut-Schlecht-Beurteilung des kompletten Bilds sein.

Das Labeling der Renderbilder kann beispielsweise auf Basis von aus dem CAD-Modell verfügbaren Daten (beispielsweise Materialnummer, Material, zugehörige Prozessschritte, etc.) durchgeführt werden.

Bei einer Ausführungsform kann vorgesehen sein, dass die Renderbilder gespeichert, beispielsweise in einer Datenbank, z.B. in einer Cloud-Datenbank oder in einem Cloud-Datalake hinterlegt werden.

Erfindungsgemäß ist vorgesehen, dass ein Label des zumindest einen (ausgewählten) Teilobjekts auf dem Renderbild eine Beschreibung des wenigstens einen Teilobjektes und eine Koordinate des wenigstens einen Teilobjekts (Position X, Y des Teilobjektes im Bild) aufweist. Die Labels können z.B. in Form einer Liste: Objekt 1 an der Position (X1, Y1), Objekt 2 an der Position (X2, X2), ..., Objekt N an der Position (X_{N}, Y_{N}) erzeugt werden.

Die Beschreibung des Teilobjekts kann beispielsweise Information über die Art des Teilobjekts, seine Beschaffenheit, Funktion etc. umfassen.

Das Label kann darüber hinaus in Form einer beispielsweise rechteckigen Umrandung, vorzugsweise in einer vorgebbaren Farbe, visualisiert werden. Eine Visualisierung kann beispielsweise dem Einrichtenden eine schnelle Überprüfung der Ergebnisse ermöglichen.

Weitere Vorteile können sich ergeben, wenn der Trainingsdatensatz eine Anzahl von realen Bildern des Objekts umfasst, wobei die Anzahl kleiner im Vergleich zu der Anzahl der Renderbilder ist, und beispielsweise in etwa 0,1% bis ungefähr 5%, insbesondere in etwa 1% beträgt.

Darüber hinaus kann vorgesehen sein, dass die Teilobjekte baulich voneinander getrennt sind.

Außerdem kann vorgesehen sein, dass die Teilobjekte (alle oder nur ein Teil davon) unterschiedlich ausgebildet sind.

Bei einer Ausführungsform kann vorgesehen sein, dass das Objekt elektronische Baugruppe als eine Flachbaugruppe ausgebildet ist, wobei die Teilobjekte als integrierte oder diskrete Bauelemente ausgebildet sind.

Dabei kann das Labeling der unterschiedlichen Renderbilder basierend auf dem CAD-Modell unter Verwendung von einer Materialstückliste der elektronischen Baugruppe erfolgen. Eine solche Materialstückliste (BOM für "Bill of Materials") kann in dem CAD-Modell hinterlegt sein.

Es kann mit Vorteil vorgesehen sein, dass sich die Renderbilder des zumindest einen Teilobjekts in mindestens einem Kriterium voneinander unterscheiden, wobei das mindestens eine Kriterium aus der Gruppe gewählt wird: Größe des zumindest einen Teilobjekts (in dem Bild), Belichtung des zumindest einen Teilobjekts, Perspektive, aus der das zumindest eine Teilobjekt in dem Renderbild zu sehen ist, Hintergrund des zumindest einen Teilobjekts, Position des zumindest einen Teilobjekts, Oberfläche, Textur, Farbe.

Darüber hinaus kann vorgesehen sein, dass in dem CAD-Modell eine Anzahl der Teilobjekte ausgewählt wird, wobei die ausgewählten Teilobjekte einer Prozessfolge zuordbar sind.

Die Zuordnung den realen Prozessen kann beispielsweise anhand Fertigungs- oder anderen Informationen aus PLM-Systemen durchgeführt werden.

Die eingangs genannte Aufgabe wird auch mit einem eingangs genannten System zum Bereitstellen eines gelabelten Trainingsdatensatzes gemäß Anspruch 6 gelöst.

Außerdem wird die eingangs genannte Aufgabe mit einem computerimplementierten Verfahren zum Bereitstellen einer trainierten Funktion gemäß Anspruch 7 gelöst.

Es kann zweckmäßig sein, wenn die Funktion eine Klassifizierungsfunktion und/oder eine Funktion zur Lokalisierung von Objekten ist, insbesondere auf einem Convolutional Neural Network basiert ist.

Darüber hinaus wird auch ein Trainingssystem offengelegt, wobei das Trainingssystem eine erste Trainingsschnittstelleneinrichtung, die dazu konfiguriert ist, wenigstens einen nach dem vorgenannten Verfahren erhältlichen gelabelten Trainingsdatensatz zu erhalten, eine Trainingsrecheneinheit, die dazu konfiguriert ist, eine Funktion basierend auf dem gelabelten Trainingsdatensatz zu trainieren, und eine zweite Trainingsschnittstelleneinrichtung, die dazu konfiguriert ist, die trainierte Funktion bereitzustellen.

Hinsichtlich einer Vereinfachung auf dem Gebiet der Bilderkennung wird die eingangs genannte Aufgabe mit einem computerimplementierten Bilderkennungsverfahren gemäß Anspruch 9 gelöst.

In anderen Worten umfassen die Outputdaten eine Segmentierung des realen Objektes in die Teilobjekte.

Es kann mit Vorteil vorgesehen sein, dass die Schritte des Verfahrens für mehrere unterschiedlichen Bildaufnahmen wiederholt werden.

Es kann zweckdienlich sein, wenn dem wenigstens einen realen Teilobjekt eine Beschreibung zugewiesen wird.

Es kann vorgesehen sein, dass die Outputdaten in Form einer verarbeiteten Bildaufnahme bereitgestellt werden, wobei die verarbeitete Bildaufnahme die Bildaufnahme mit wenigstens einer Markierung des wenigstens einen realen Teilobjektes ist. Dabei kann vorgesehen sein, dass die Markierung eine Beschriftung des wenigstens einen realen Teilobjektes und/oder eine Koordinate des wenigstens einen Teilobjekts aufweist.

Die Beschriftung des realen Teilobjekts kann beispielsweise Information über die Art des realen Teilobjekts, seine Beschaffenheit, Funktion etc. umfassen. Die Markierung kann darüber hinaus in Form einer beispielsweise rechteckigen Umrandung, vorzugsweise in einer vorgebbaren Farbe, visualisiert werden. Eine Visualisierung kann beispielsweise dem Einrichtenden eine schnelle Überprüfung der Ergebnisse ermöglichen.

Es kann zweckmäßig sein, wenn die Beschriftung entsprechend einer Materialstückliste und ein Konfidenzniveau für die Erkennung des Teilobjekts umfasst.

Bei einer Ausführungsform kann vorgesehen sein, dass das reale Objekt als eine Flachbaugruppe ausgebildet ist und die Teilobjekte als integrierte oder diskrete Bauelemente ausgebildet sind.

Bei einer Ausführungsform ist das System zur Bilderkennung als ein System zum Prüfen von Leiterplatten, insbesondere Leiterplattenprüfsystem ausgebildet.

Ein solches Leiterplattenprüfsystem kann sehr effizient bei Herstellung von Flachbaugruppen eingesetzt werden. Dabei ermöglicht Nutzbarkeit des in der Produktentwicklung vorhandenen Wissens (Produktstruktur, Bill of Materials (Stückliste)) die automatische Generierung sinnvoller Trainingsdaten, da diese Trainingsdaten auf Einzelteilebene generiert werden können und die trainierte Funktion / der trainierte Algorithmus darauf trainiert werden kann, diese Einzelteile / diese einzelnen Bauelemente zu erkennen.

Darüber hinaus erlaubt Verwendung eines CAD-Modells eine Zuordnung der Materialstückliste (BOM) zu einer Prozessfolge (BOP). Durch die Verknüpfung ist es möglich automatisiert Prüfprogramme für spezifische Prozesse zu generieren (auf Basis zugeschnittener Trainingsdaten). Auch hier wird wieder auf das Wissen über die hierarchische Struktur zurückgegriffen.

Im Folgenden wird die Erfindung anhand der in den Figuren dargestellten Ausführungsbeispiele näher beschrieben und erläutert. Es zeigen:
- FIG 1: ein Flussdiagramm eines computerimplementierten Verfahrens zum Bereitstellen eines gelabelten Trainingsdatensatzes,
- FIG 2: ein CAD-Modell einer Flachbaugruppe,
- FIG 3 bis FIG 6: Zwischenbilder zur Generierung von Labels,
- FIG 7 bis FIG 10: generierte Renderbilder,
- FIG 11: ein System zum Bereitstellen von synthetischen gelabelten Trainingsdatensätzen,
- FIG 12: ein gelabeltes Renderbild,
- FIG 13: ein Trainingssystem,
- FIG 14: ein Flussdiagramm eines computerimplementierten Bilderkennungsverfahrens,
- FIG 15: eine gemäß dem Bilderkennungsverfahren der FIG 14 verarbeitete Bildaufnahme,
- FIG 16: ein Datenverarbeitungssystem zum Ausführen eines Bilderkennungsverfahrens, und
- FIG 17: eine Automatisierungsanlage.

In den Ausführungsbeispielen und Figuren können gleiche oder gleich wirkende Elemente jeweils mit den gleichen Bezugszeichen versehen sein. Die dargestellten Elemente und deren Grö-ßenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein.

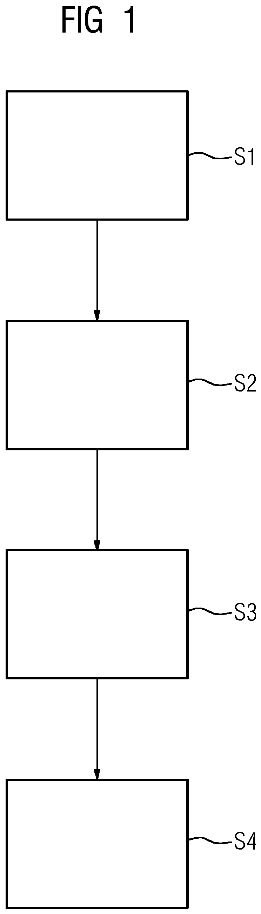

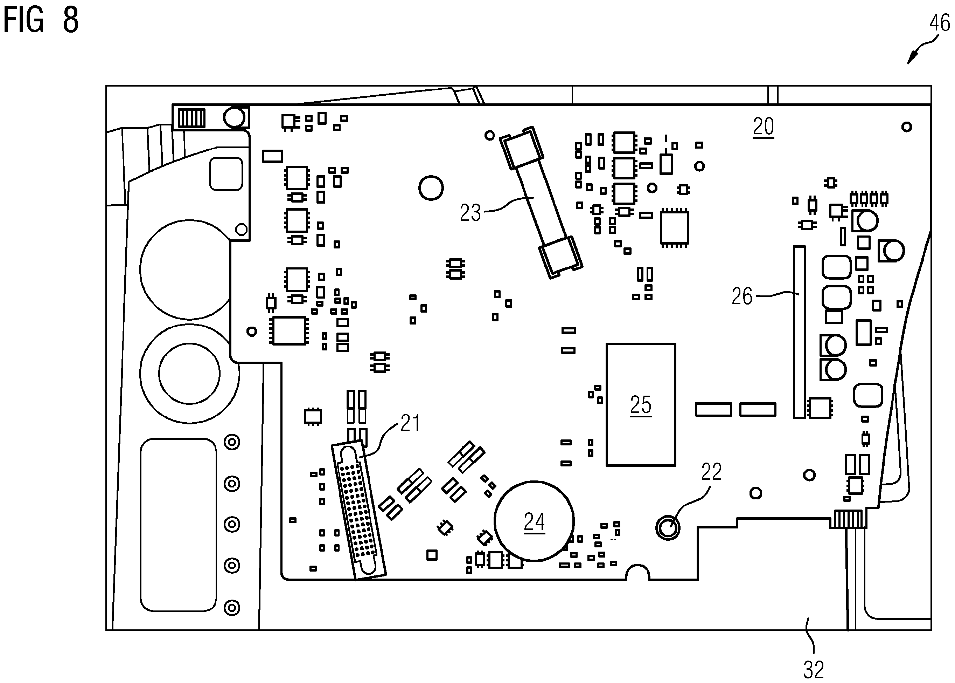

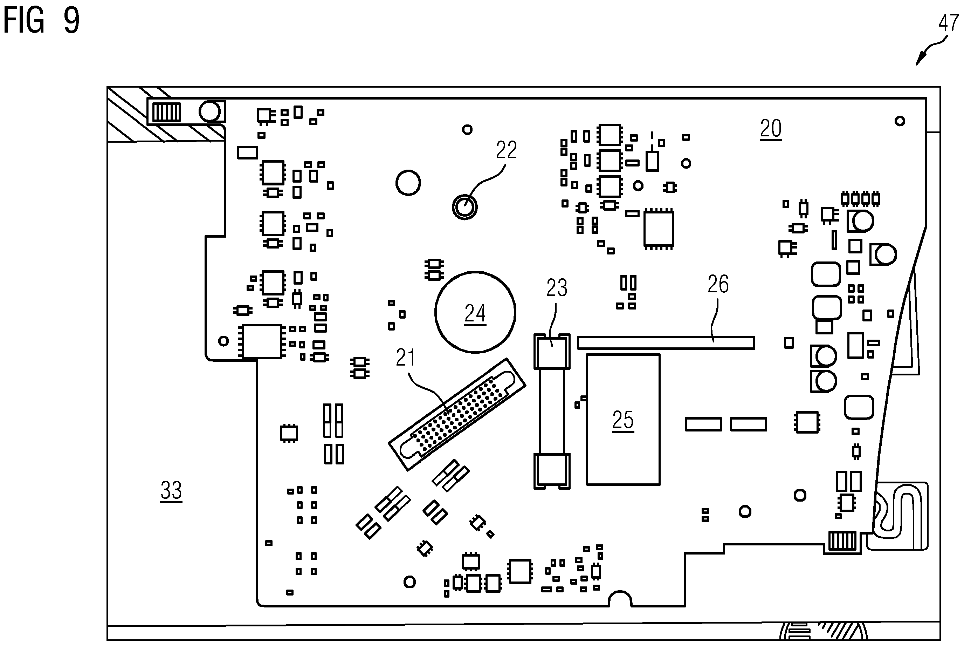

Zunächst wird auf FIG 1 bis FIG 10 Bezug genommen. FIG 1 zeigt ein Flussdiagramm einer Ausführungsform eines computerimplementierten Verfahrens zum Bereitstellen eines gelabelten Trainingsdatensatzes.

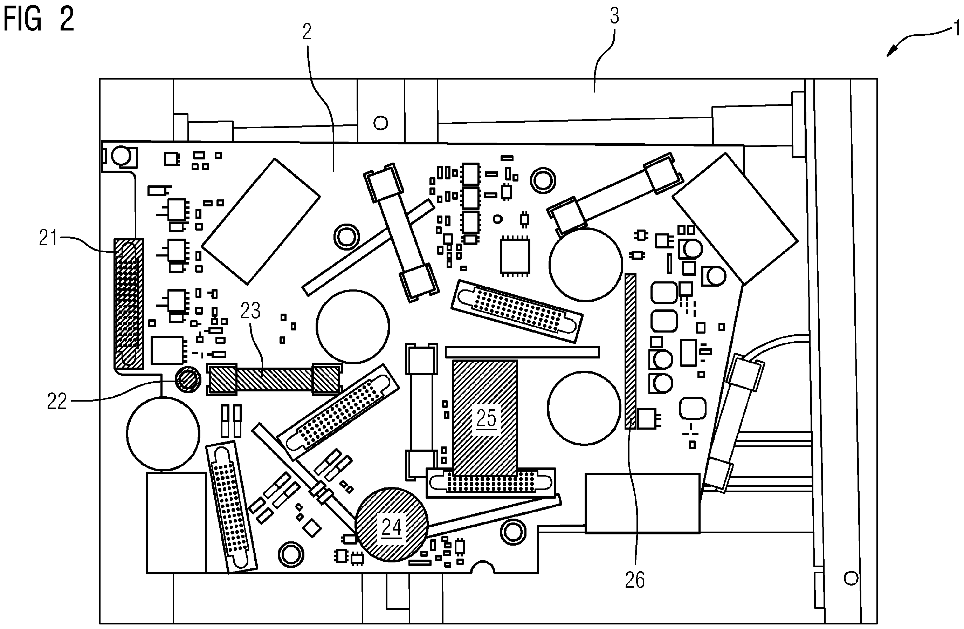

Anhand eines CAD-Modells eines Objektes, wobei das Objekt viele Teilobjekte umfasst, wird zumindest ein Teilobjekt ausgewählt - Schritt S1. FIG 2 zeigt beispielhaft ein CAD-Modell 1 einer Flachbaugruppe 2 auf einem Hintergrund 3. Die Flachbaugruppe 2 weist mehrere elektronische Bauelemente auf. Sechs Bauelemente 21, 22, 23, 24, 25, 26 der Flachbaugruppe 2 sind ausgewählt.

Die Bauelemente können, wie gezeigt, baulich voneinander getrennt und unterschiedlich voneinander ausgebildet sein. FIG 2 lässt erkennen, dass es auch identische Bauelemente geben kann. Von den identisch ausgebildeten Bauelementen kann jeweils ein Bauelement zum Generieren von Renderbildern (siehe unten) ausgewählt werden.

Die Auswahl der der Bauelemente 21, 22, 23, 24, 25, 26 in dem CAD-Modell 1 kann händisch über eine manuell bedienbare Schnittstelle eines Computers oder auch automatisch beispielsweise anhand der BOM (zu Englisch "Bill of Materials") und/oder BOP (Prozessfolge) erfolgen.

Für die ausgewählten Bauelemente 21, 22, 23, 24, 25, 26 wird eine Vielzahl unterschiedlicher Renderbilder 45, 46, 47, 48 generiert - Schritt S2. Bei den Renderbildern handelt es sich beispielsweise um mittels einer Vorausberechnung an dem Computer erzeugte virtuelle, vorzugsweise wirklichkeitsnahe dreidimensionale Darstellungen, auf den wenigstens ein der ausgewählten Bauelemente 21, 22, 23, 24, 25, 26 zu sehen ist. Vorzugsweise ist auf jedem Renderbild wenigstens ein der ausgewählten Bauelemente 21, 22, 23, 24, 25, 26 zu sehen.

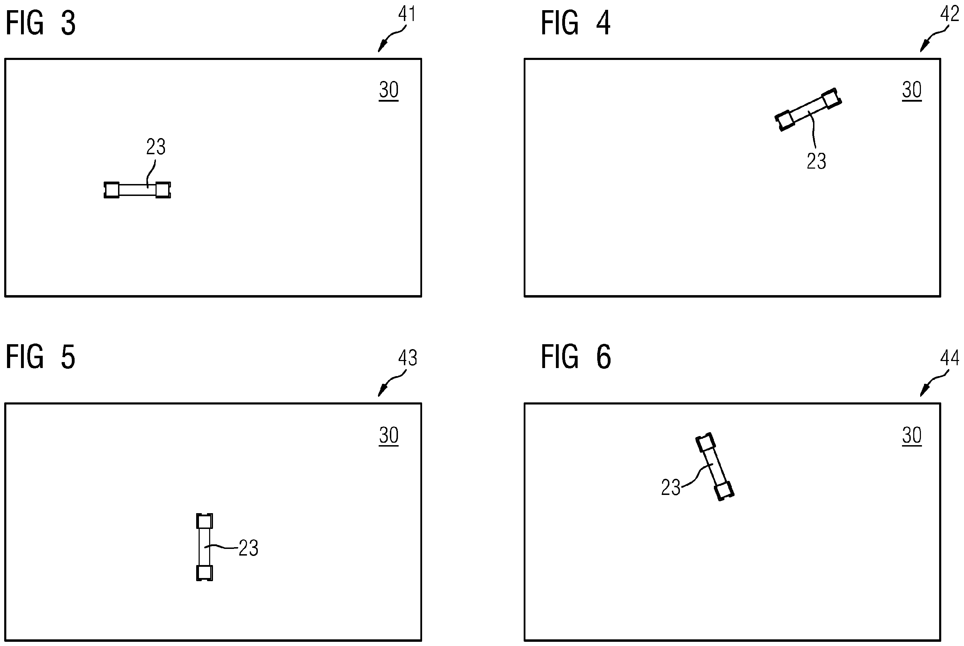

In einem Teilschritt (in FIG 1 nicht gezeigt) können Zwischenbilder 41, 42, 43, 44 generiert werden (FIG 3 bis FIG 6). Diese Zwischenbilder 41, 42, 43, 44 können z.B. der Generierung der Labels (Rechtecke mit Koordinaten x, y) dienen.

Auf jedem Zwischenbild 41, 42, 43, 44 ist jeweils ein Bauelement 23 in unterschiedlichen Positionen und aus unterschiedlichen Perspektiven zu sehen. Die Position des Bauelements 23 auf dem Zwischenbild 41 bis 44 kann dabei zufällig sein, beispielsweise mit einem Zufallsgenerator generiert werden. Die Position des Bauelements 23 auf dem Zwischenbild 41 bis 44 kann aber auch jener Position entsprechen, die eines der anderen, identisch ausgebildeten Bauelemente auf der Flachbaugruppe 2 annimmt (vgl. FIG 2 mit Figuren 3 bis 6). Die Zwischenbilder 41 bis 44 weisen einen weißen Hintergrund 30 auf.

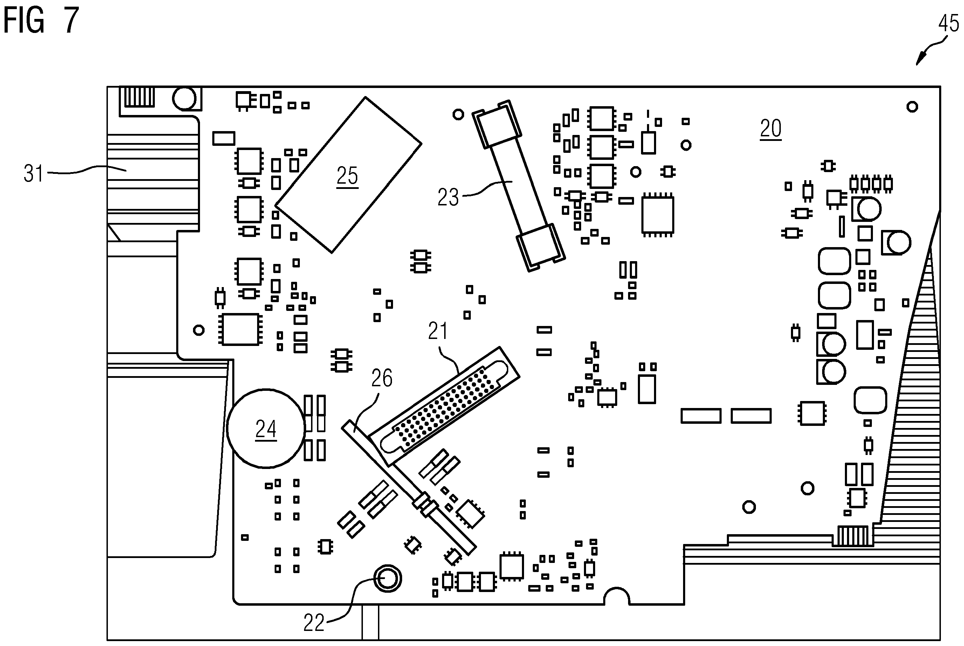

Figuren 7 bis 10 zeigen Beispiele von unterschiedlichen Renderbildern 45 bis 48. Auf jedem Renderbild sind die ausgewählten Bauelemente 21, 22, 23, 24, 25, 26 gezeigt.

Auf jedem Renderbild 45 bis 48 der Figuren 7 bis 10 ist eine Leiterplatte 20 der Flachbaugruppe 2 auf jeweils unterschiedlichem Hintergrund 31 bis 34 zu sehen. Die Farbe der Leiterplatte kann ebenfalls variiert werden (hier nicht gezeigt). Darüber hinaus zeigt jedes Renderbild 45 bis 48 alle ausgewählten Bauelemente 21 bis 26, die über die sichtbare Oberfläche der Leiterplatte 20 zufällig verteilt sein können. Die Positionen der Bauelemente 21 bis 26 auf der Oberfläche können auch den Positionen entsprechen, die die Bauelemente des gleichen Typs (identisch ausgebildete Bauelemente) in der Flachbaugruppe 2 aufweisen (vgl. FIG 2). Andere in dem CAD-Modell 1 sichtbare Bauelemente (vgl. FIG 2) sind auf den Renderbildern 45 bis 48 nicht zu sehen. Sie können, müssen aber nicht, beim Generieren der Renderbilder ausgelassen werden. Um eine vorgenannte zufällige Verteilung zu erzielen, können zufällige Positionen auf der Oberfläche der Leiterplatte 20 für die ausgewählten Bauelemente 21 bis 26 generiert werden.

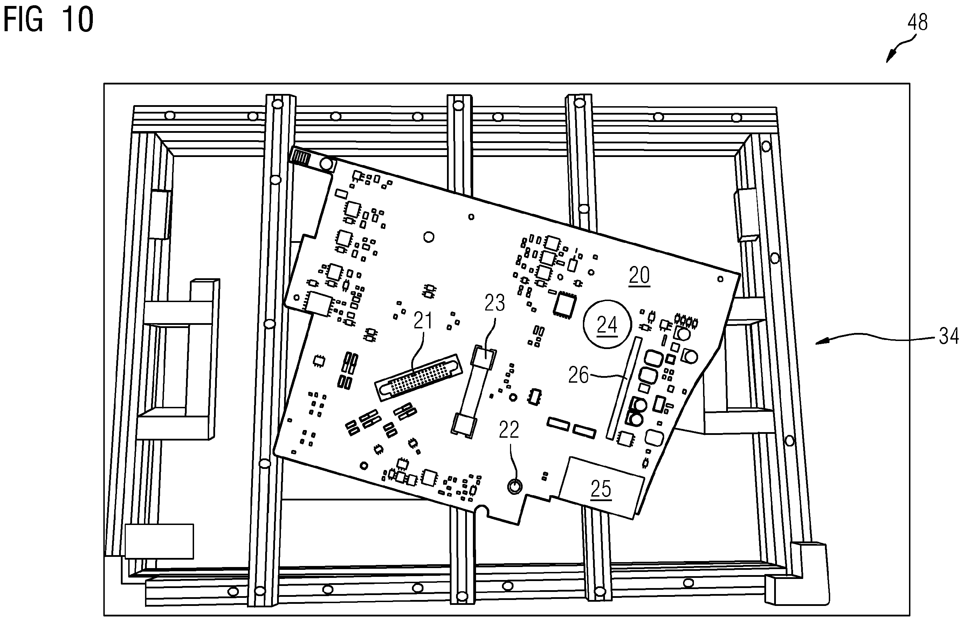

FIG 10 lässt darüber hinaus erkennen, dass beim Generieren der Renderbilder auch die Größe und/oder die Position und/ oder die Ausrichtung der Leiterplatte 20 variiert werden kann.

Basierend auf dem CAD-Modell werden die unterschiedlichen Renderbilder 45 bis 48 gelabelt - Schritt S3. Das Labeling kann z.B. basierend auf entsprechenden Einträgen in dem CAD-Modell durchgeführt werden. Beispielsweise können die Renderbilder 45 bis 48 entsprechend einer Materialstückliste gelabelt werden. Die Renderbilder 45 bis 48 können auf Basis der Labelgenerierungsbilder / Zwischenbilder 41, 42, 43, 44 gelabelt werden. Zum Beispiel kann Label von Bauteil 23 mit dem Zwischenbild 43 bzw. 44 erzeugt und für das Renderbild 47 bzw. die Renderbilder 45 und 46 verwendet werden. Das Labeling kann somit automatisch erfolgen.

Die Renderbilder 45 bis 48 können vor oder nach dem Labeln abgespeichert werden.

Nachdem die Renderbilder 45 bis 48 gelabelt wurden, wird basierend darauf ein gelabelter Trainingsdatensatz bereitgestellt - Schritt S4.

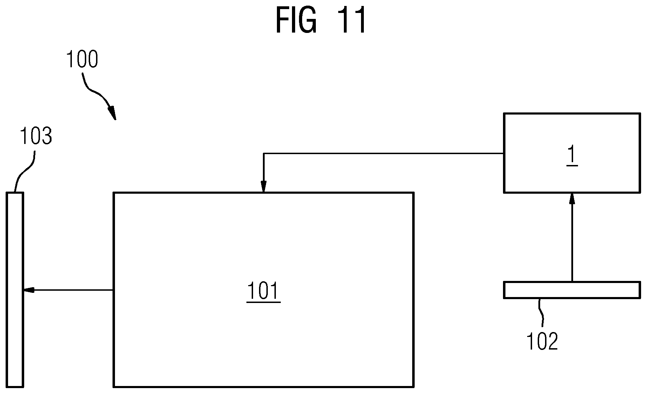

Der vorgenannte Ablauf kann in Form von Befehlen eines Computerprogramms vorliegen. Das Computerprogramm kann beispielsweise auf einer Recheneinheit 101 abgearbeitet werden (FIG 11). Es kann beispielsweise in einem flüchtigen oder nichtflüchtigen Speicher der Recheneinheit vorliegen/gespeichert sein.

FIG 11 zeigt ein System 100, das beispielsweise den vorgenannten (synthetischen) gelabelten Trainingsdatensatz bereitstellen kann, wenn das vorgenannte Computerprogramm auf der von dem System 100 umfassten Recheneinheit 101 abgearbeitet wird.

Das System 100 kann ferner das CAD-Modell 1 und eine erste Schnittstelle 102 umfassen, die dazu ausgebildet und konfiguriert ist, eine Auswahl der Bauelemente 21 bis 26 in dem CAD-Modell 1 zu ermöglichen.

Die Recheneinheit 101 ist dazu konfiguriert, die unterschiedlichen Renderbilder 45 bis 48 zu generieren und diese basierend auf dem CAD-Modell, beispielsweise auf der Materialstückliste, die in dem CAD-Modell vorliegen kann, zu labeln.

Darüber hinaus weist das System 100 eine zweite Schnittstelle 103 auf, die dazu ausgebildet und konfiguriert ist, den gelabelten, auf den unterschiedlichen Renderbildern 45 bis 48 basierten Trainingsdatensatz bereitzustellen.

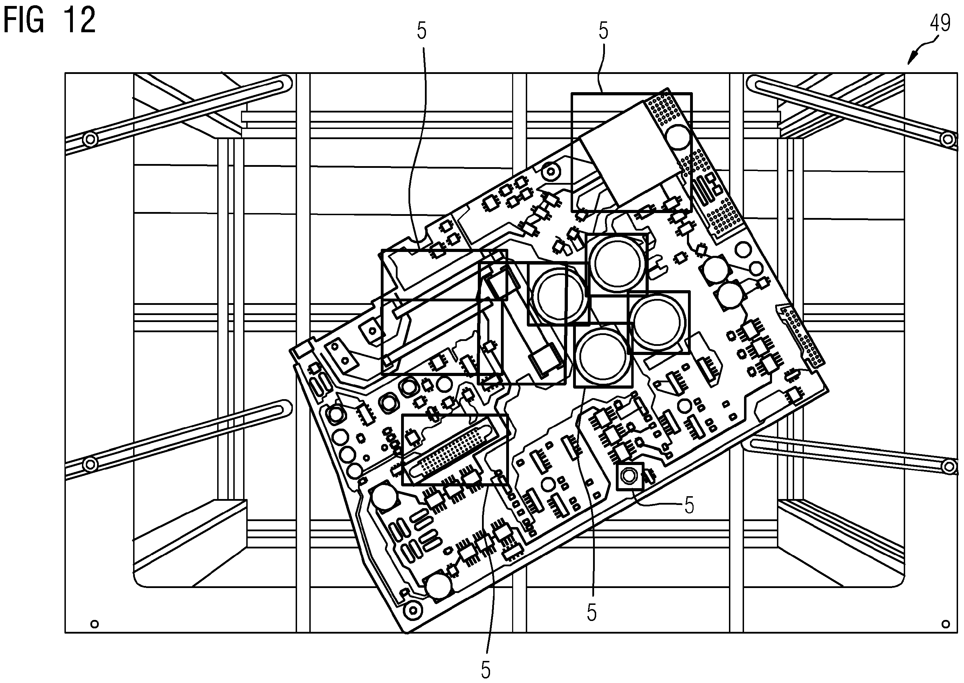

FIG 12 zeigt ein Beispiel eines gelabelten Renderbilds 49, auf dem insgesamt zehn Teilobjekte (Bauelemente) eines Objekts (Flachbaugruppe) jeweils mit einem Label 5 markiert wurden. Dabei kann jedes Label 5 eine Beschreibung des Bauelements und/oder seine Koordinate auf dem gelabelten Renderbild 49 umfassen. Darüber hinaus kann jedes Label 5 in Form einer rechteckigen Umrandung beispielsweise in einer vorgebbaren Farbe, die das gelabelte Bauelement umschließt, ausgebildet sein. Eine solche Visualisierung lässt für den Einrichtenden eine schnelle Überprüfung der Ergebnisse zu.

Zusammenfassend lassen die Figuren 7 bis 10 und FIG 12 erkennen, dass sich die gelabelten Renderbilder 45 bis 49 in mindestens einem Kriterium voneinander unterscheiden, wobei das mindestens eine Kriterium aus der Gruppe gewählt wird: Größe der Bauelemente in dem Renderbild, Belichtung, Perspektive, aus der die Bauelemente zu sehen sind, Hintergrund der Bauelemente (zum Hintergrund der Bauelemente kann die Leiterplatte 20 zählen), Position Bauelemente in dem jeweiligen Renderbild 45 bis 49, Oberflächenmuster, Textur, Farbe.

Die Auswahl der Bauelemente 21 bis 26 kann darüber hinaus einer Prozessfolge, beispielsweise eines Flachbaugruppeherstellungsprozesses, zugeordnet werden.

Beispielsweise erlauben CAD-Programme eine Zuordnung der Materialstückliste (BOM) zu einer Prozessfolge (BOP). Durch eine solche Verknüpfung ist es möglich, automatisiert Prüfprogramme für spezifische Prozesse / Prozessschritte zu generieren, die auf zugeschnittenen Trainingsdatensätzen basieren, wobei die Trainingsdatensätze, wie oben beschrieben, bereitgestellt werden können. Hier kann auf das Wissen über die hierarchische Struktur zurückgegriffen werden. Bei Flachbaugruppen kann eine hierarchische Struktur eine Aufteilung der Flachbaugruppe in Unterbaugruppen (die wiederum in Einzelbauteile aufgeteilt werden können) und Einzelbauteilen sein. Dabei kann das in der Produktentwicklung vorhandene Wissen (Produktstruktur, Bill of Materials (Stückliste)) zu Nutze gemacht und dadurch eine automatische, einer bestimmten Prozessfolge entsprechende Generierung der Trainingsdatensätzen ermöglicht.

Ein solches Prüfprogramm kann eine trainierte Funktion umfassen, die beispielsweise auf den wie oben beschrieben generierten Trainingsdatensätzen trainiert wurde, und diese trainierte Funktion auf Bildaufnahmen von realen Flachbaugruppen, beispielsweise in einem bestimmten Herstellungsstadium, anwenden, um einzelne Bauelemente dieser Flachbaugruppen zu erkennen.

Die Funktion kann eine Klassifizierungs- und/oder eine Lokalisierungsfunktion sein, insbesondere auf einem Convolutional Neural Network basieren. Die Klassifizierung kann z.B. Gut-Schlecht-Beurteilung einer kompletten Bildaufnahme sein.

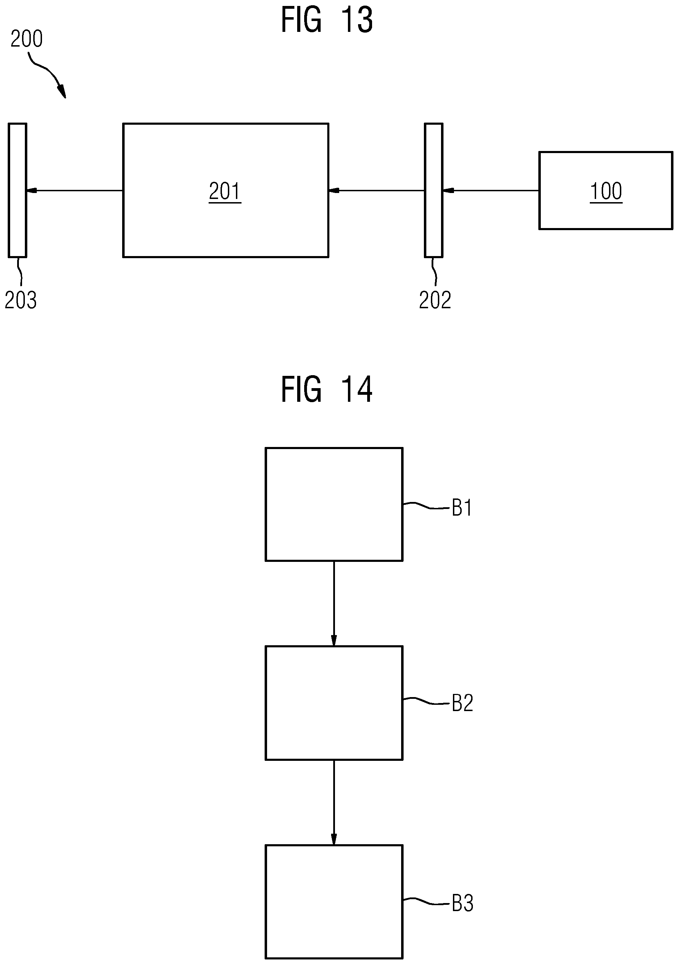

FIG 13 zeigt eine Ausführungsform eines Trainingssystems. Das gezeigte Trainingssystem 200 umfasst eine erste Trainingsschnittstelleneinrichtung 202, die dazu konfiguriert ist, Trainingsdatensätze zu erhalten, die beispielsweise mittels des vorgenannten Systems 100 bereitgestellt werden. Ferner umfasst das Trainingssystem 200 eine Trainingsrecheneinheit 201, die dazu konfiguriert ist, eine Funktion basierend auf dem Trainingsdatensatz zu trainieren. Hierzu kann die Trainingsrecheneinheit 201 ein Trainingscomputerprogramm mit den entsprechenden Befehlen aufweisen. Außerdem umfasst das Trainingssystem 200 eine zweite Trainingsschnittstelleneinrichtung 203, die dazu konfiguriert ist, die trainierte Funktion bereitzustellen.

Besonders gute Ergebnisse können bei einer Objekterkennung erzielt werden, wenn die Funktion noch zusätzlich auf realen gelabelten Bildern trainiert wird. Die Anzahl der realen Bilder in dem Trainingsdatensatz kann klein im Vergleich zu der Anzahl der synthetischen Bilder bzw. Renderbilder sein. Der Anteil der realen Bilder in dem Trainingsdatensatz kann beispielsweise 0,1% bis 5%, insbesondere 1% betragen.

FIG 14 zeigt eine Ausführungsform eines computerimplementierten Bilderkennungsverfahrens. Die Ausführungsform betrifft ein Objekterkennungsverfahren, welches an dem Beispiel einer Erkennung von einzelnen Bauelementen einer Flachbaugruppe erläutert wird. Es wird verstanden, dass das erfindungsgemäße Bilderkennungsverfahren nicht auf Erkennung von Bauelementen in den Flachbaugruppen beschränkt ist.

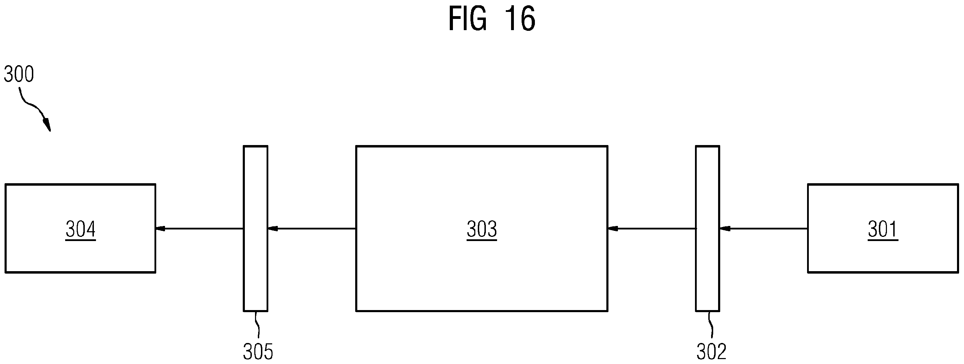

Zunächst werden Inputdaten bereitgestellt - Schritt B1. Dies kann beispielsweise mittels einer ersten Schnittstelleneinrichtung 302 erfolgen (s.a. FIG 16). Die Inputdaten sind eine Bildaufnahme 301 eines realen Objektes - hier einer Flachbaugruppe, die mehrere Bauelemente umfasst.

Um die einzelnen Bauelemente der Flachbaugruppe zu erkennen, kann eine, beispielsweise wie oben beschrieben, trainierte Funktion auf die Inputdaten angewandt werden - Schritt B2. Dabei werden Outputdaten erzeugt, die eine Segmentierung der Inputdaten sind und eine Klassifizierung des Inputs (z.B. der ganzen Bildaufnahme) an sich oder wenigstens eines Bauelements umfassen. Dies kann beispielsweise durch eine Recheneinrichtung 303 ausgeführt werden.

Anschließend werden die Outputdaten beispielsweise über eine zweite Schnittstelleneinrichtung 303 bereitgestellt - Schritt B3.

Die Outputdaten können als eine verarbeitete Bildaufnahme 304 breitgestellt werden, wobei die verarbeitete Bildaufnahme 304 die Bildaufnahme 301 mit darin enthaltenen Markierungen der Bauelemente sein kann.

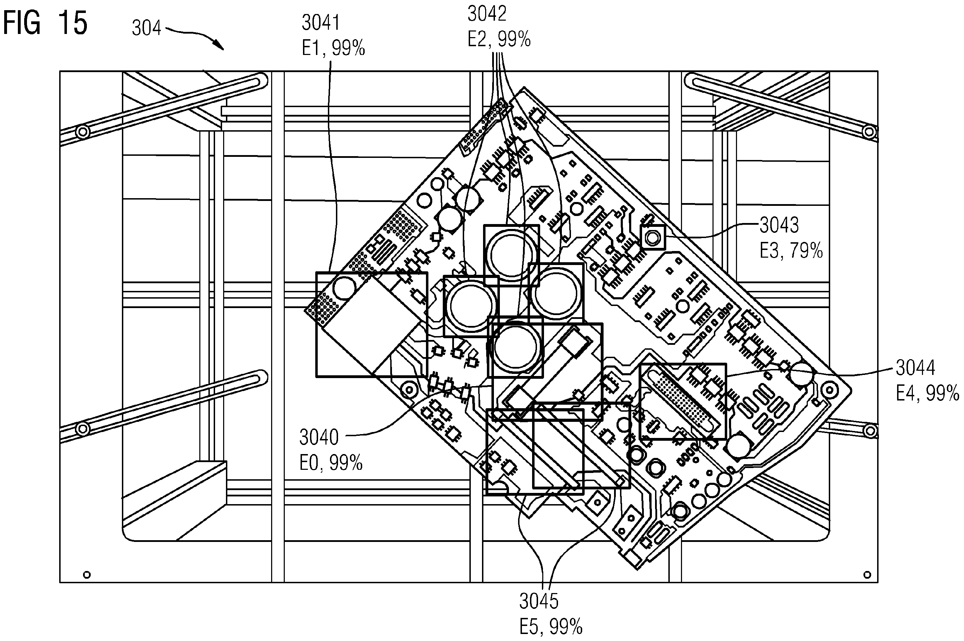

FIG 15 zeigt ein Beispiel der verarbeiteten Bildaufnahme 304. FIG 15 ist zu entnehmen, dass auf der Bildaufnahme 301 fünf unterschiedliche Typen von Bauelementen erkannt wurden. Auf der verarbeiteten Bildaufnahme 304 sind demnach fünf unterschiedliche Typen von Markierungen 3040, 3041, 3042, 3043, 3044, 3045 zu erkennen.

FIG 15 lässt ferner erkennen, dass jedes der erkannten realen Bauelemente markiert ist. Jede Markierung 3040, 3041, 3042, 3043, 3044, 3045 kann eine Koordinate/Position des realen Bauelements auf dem Bild 304 enthalten und vorzugsweise eine Beschriftung des erkannten Bauelements umfassen. Die Beschriftung kann beispielsweise eine Bezeichnung E0, E1, E2, E3, E4, E5 des Bauelements, die der Materialstückliste (BOM) aus dem CAD-Modell 1 entsprechen kann, und/oder ein Konfidenzniveau (in % angegeben) der Erkennung des entsprechenden Bauelements umfassen.

Darüber hinaus können die Markierungen 3040, 3041, 3042, 3043, 3044, 3045 in Form einer beispielsweise rechteckigen Umrandung visualisiert sein. Eine solche Visualisierung kann dem Einrichtenden eine schnelle Überprüfung der Ergebnisse ermöglichen.

Jede Markierung 3040, 3041, 3042, 3043, 3044, 3045 kann darüber hinaus eine vorgebbare Farbe aufweisen. Markierungen 3040, 3041, 3042, 3043, 3044, 3045 unterschiedliche Typen können unterschiedliche Farben aufweisen.

Es versteht sich, dass die Schritte des vorgenannten Verfahrens für mehrere unterschiedlichen Bildaufnahmen von realen Objekten, zum Beispiel Flachbaugruppen wiederholt werden können.

FIG 16 zeigt eine Ausführungsform eines Datenverarbeitungssystems, welches z.B. zum Ausführen des vorgenannten Bilderkennungsverfahrens mit Schritten der B1 bis B3 geeignet ist. Das gezeigte Datenverarbeitungssystem 300 umfasst die Recheneinrichtung 303, die dazu ausgebildet und konfiguriert ist, Bildaufnahmen, zum Beispiel die Bildaufnahme 301 über die erste Schnittstelleneinrichtung 302 zu erhalten, diese beispielsweise wie oben beschrieben zu verarbeiten und in Form von verarbeiteten Bildaufnahmen, zum Beispiel in Form von der verarbeiteten Bildaufnahme 304, über die zweite Schnittstelleneinrichtung bereitzustellen bzw. auszugeben.

Das Datenverarbeitungssystem 300 kann eine Bilderkennungssoftware aufweisen, die Befehle umfasst, die (beim Ausführen der Bilderkennungssoftware) beispielsweise bewirken, dass das Datenverarbeitungssystem 300 die vorgenannten Verfahrensschritte B1 bis B3 ausführt. Die Bilderkennungssoftware kann beispielsweise auf der Recheneinrichtung 303 gespeichert sein.

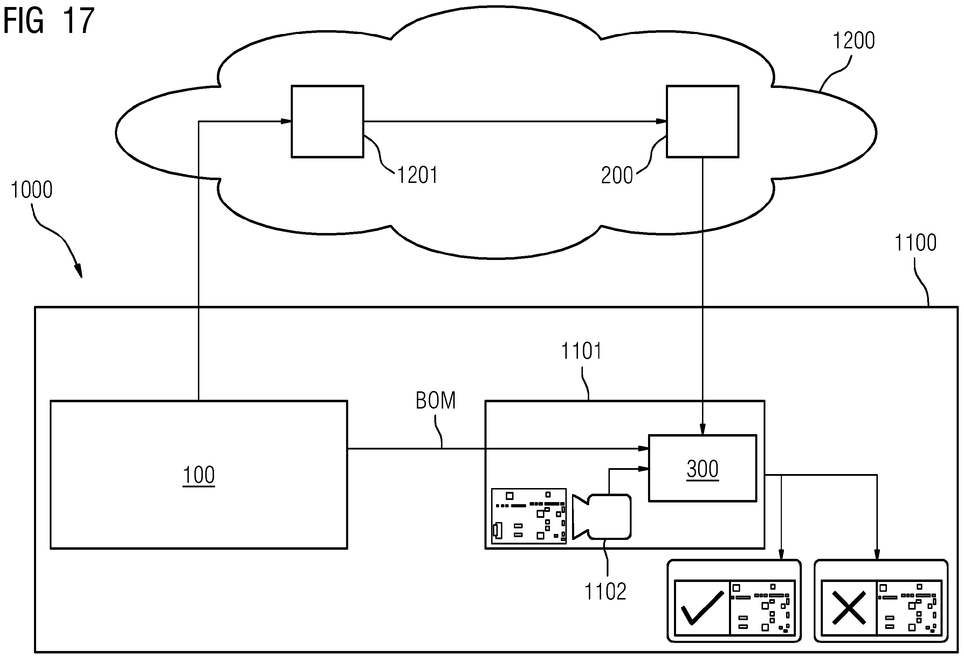

FIG 17 zeigt eine Ausführungsform eines industriellen Systems. Die oben beschriebenen Verfahren und Systeme können in dem gezeigten Beispiel des industriellen Systems ihre Anwendung finden. Das industrielle System ist als eine Automatisierungsanlage 1000 ausgebildet.

Die Automatisierungsanlagen können mehrere Software- und Hardwarekomponenten umfassen. Die in FIG 17 gezeigte Automatisierungsanlage 1000 umfasst zwei Ebenen: eine Shopfloor-Ebene 1100, z.B. eine Werkstatt, eine Fabrikhalle, eine Produktionsstätte o. Ä. und eine als Cloud-Ebene 1200 ausgebildete Datenverarbeitungsebene. Es ist durchaus denkbar, dass die Datenverarbeitungsebene an der Shopfloor-Ebene angeordnet ist (nicht gezeigt) und beispielsweise eine oder mehrere Recheneinheiten umfasst.

Die Shopfloor-Ebene 1100 kann beispielsweise zur Herstellung von Flachbaugruppen eingerichtet sein.

Die Shopfloor-Ebene 1100 kann beispielsweise das vorgenannte System 100 mit einem entsprechenden Computerprogramm umfassen, die dazu konfiguriert und/oder eingerichtet ist, die generierten gelabelten Datensätze an eine beispielsweise in der Cloud-Ebene 1200 angeordnete Datenbank 1201 zu übertragen.

Die Cloud-Ebene 1200 kann das vorgenannte Trainingssystem 200 umfassen, welches beispielsweise dazu konfiguriert ist, die gelabelten Datensätze von der Datenbank 1201 abzurufen, basierend darauf eine Funktion zu trainieren und diese trainierte Funktion bereitzustellen. Es ist durchaus denkbar, dass die Datenverarbeitungsebene an der Shopfloor-Ebene angeordnet ist und das Trainingssystem 200 umfasst (nicht gezeigt) .

Die trainierte Funktion kann beispielsweise zum Abruf aus der Datenverarbeitungsebene, z.B. aus der Cloud bereitgestellt werden oder an ein Prüfsystem 1101 zum Prüfen von Flachbaugruppen übermittelt werden.

Das Prüfsystem 1101 kann in der Shopfloor-Ebene 1100 angeordnet sein.

Das Prüfsystem 1101 umfasst eine Bildaufnahmevorrichtung 1102 und das vorgenannte Datenverarbeitungssystem 300. Das Datenverarbeitungssystem 300 kann die trainierte Funktion, wie oben beschrieben, entweder aus der Cloud oder von einem lokalen (leistungsstarken) Trainingsrechner, zum Beispiel vom Trainingssystem 200 abrufen oder übermittelt bekommen.

Die Bildaufnahmevorrichtung 1102 ist dazu ausgebildet, Bildaufnahmen von Flachbaugruppen nach einem bestimmten Prozessschritt zu machen und diese an das Datenverarbeitungssystem 300 zu übermitteln, welches anschließend den Zustand der entsprechenden Flachbaugruppe überprüft und das Ergebnis der Überprüfung, beispielsweise in Form einer OK/NOK-Beurteilung (Ok-oder-Not-Ok) bereitstellt.

Die Materialstückliste (BOM) kann in dem System 100 zum Import und Benennung der Bauteile / Bauelemente eingesetzt werden. Das System 100 enthält aber nicht zwangsweise Informationen über die richtige Anzahl und Position der Bauteile einer spezifischen Flachbaugruppenvariante.

Obwohl die Erfindung im Detail durch Ausführungsbeispiele näher illustriert und beschrieben wurde, die Flachbaugruppen und ihre Herstellungsprozesse betreffen, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Das in der Erfindung offenbarte Verfahren kann ihre Anwendung *mutatis mutandis* auf anderen Gebieten finden, auf welchen Bild- und insbesondere Objekterkennung eine wesentliche Rolle spielt. Eine nicht abschließende Liste der Anwendungsgebiete, welche nicht Teil der Erfindung sind, umfasst: Automobilproduktion, Flugzeugbau, Medizintechnik, Verpackungsprozesse, Kommissionierprozesse, Bestandsprüfung, Robotertechnik, Industrieanlagenbau. Das Verfahren kann somit für alle Produktionsbereiche angewandt werden, bei denen CAD-Daten verwendet werden können und eine Prüfung stattfindet. So sind z.B. Anwendungen in dem autonomen Fahren von Kfz und von Zügen durchaus denkbar, wenn CAD-Modelle entsprechender Umgebungen und deren Bestandteilen zur Verfügung stehen.

## Patentansprüche

1. Computerimplementiertes Verfahren zum Bereitstellen eines gelabelten Trainingsdatensatzes, wobei
- in einem CAD-Modell (1) einer eine Vielzahl von elektronischen Bauelementen umfassenden elektronischen Baugruppe (2) zumindest ein elektronisches Bauelement (21, 22,23,24,25,26) ausgewählt wird, wobei das CAD-Modell (1) eine Beschreibung des wenigstens einen elektronischen Bauelements (21,22,23,24,25,26) und eine Koordinate des wenigstens einen elektronischen Bauelements umfasst, wobei die Beschreibung des elektronischen Bauelements Information über die Art des elektronischen Bauelements umfasst und durch die Koordinaten der elektronischen Bauelemente ihre Positionen in der elektronischen Baugruppe (2) bestimmt sind,
- eine Vielzahl unterschiedlicher Renderbilder (45,46,47, 48) generiert wird, wobei die unterschiedlichen Renderbilder (45,46,47,48) das zumindest eine ausgewählte elektronische Bauelement (21,22,23,24,25,26) umfassen, wobei eine Position des zumindest einen ausgewählten elektronischen Bauelements (21,22,23,24,25,26) bei zumindest zwei unterschiedlichen Renderbildern unterschiedlich ist,
- die unterschiedlichen Renderbilder basierend auf der in dem CAD-Modell (1) enthaltenen Beschreibung des wenigstens einen elektronischen Bauelements (21,22,23,24,25,26) und auf der in dem CAD-Modell (1) enthaltenen Koordinate des wenigstens einen elektronischen Bauelements gelabelt werden, um einen auf den gelabelten Renderbildern (49) basierten Trainingsdatensatz bereitzustellen, wobei ein Label (5) des zumindest einen elektronischen Bauelements (21,22,23,24,25,26) eine Beschreibung des wenigstens einen elektronischen Bauelements und eine Position des wenigstens einen elektronischen Bauelements in dem Renderbild aufweist.

2. Verfahren nach Anspruch 1, wobei das Label (5) in Form einer beispielsweise rechteckigen Umrandung visualisiert ist.

3. Verfahren nach Anspruch 1 oder 2, wobei die elektronische Baugruppe als eine Flachbaugruppe (2) ausgebildet ist, wobei die elektronischen Bauelemente (21,22,23,24,25,26) als integrierte oder diskrete Bauelemente ausgebildet sind.

4. Verfahren nach einem der Ansprüche 1 bis 3, wobei sich die Renderbilder (45,46,47,48) des zumindest einen ausgewählten elektronischen Bauelements (21,22,23,24,25,26) in mindestens einem Kriterium voneinander unterscheiden, wobei das mindestens eine Kriterium aus der Gruppe gewählt wird: Größe des zumindest einen elektronischen Bauelements, Belichtung des zumindest einen elektronischen Bauelements, Perspektive des zumindest einen elektronischen Bauelements, Hintergrund (3,31,32,33,34) des zumindest einen elektronischen Bauelements, Position des zumindest einen elektronischen Bauelements, Oberfläche, Textur, Farbe.

5. Verfahren nach einem der Ansprüche 1 bis 4, wobei in dem CAD-Modell (1) eine Anzahl der elektronischen Bauelemente (21,22,23,24,25, 26) ausgewählt wird, wobei die ausgewählten elektronischen Bauelemente (21, 22,23,24,25,26) einer Prozessfolge zuordbar sind.

6. System (100) zum Bereitstellen eines gelabelten Trainingsdatensatzes umfassend
- einen computerlesbaren Speicher mit einem CAD-Modell (1) eines eine Vielzahl von elektronischen Bauelementen umfassenden elektronischen Baugruppe (2), wobei das CAD-Modell (1) eine Beschreibung des wenigstens einen elektronischen Bauelements (21,22,23,24,25,26) und eine Koordinate des wenigstens einen elektronischen Bauelements umfasst, wobei die Beschreibung des elektronischen Bauelements Information über die Art des elektronischen Bauelements umfasst und durch die Koordinaten der elektronischen Bauelemente ihre Positionen in der elektronischen Baugruppe bestimmt sind,
- eine erste Schnittstelle (102), die dazu ausgebildet und konfiguriert ist, eine Auswahl zumindest eines elektronischen Bauelements (21,22,23,24,25,26) in dem CAD-Modell (1) zu ermöglichen,
- eine Recheneinheit (101), die dazu konfiguriert ist, eine Vielzahl unterschiedlicher Renderbilder (45,46,47,48) zu generieren, wobei die unterschiedlichen Renderbilder (45, 46,47,48) das zumindest eine ausgewählte elektronische Bauelement (21, 22,23,24,25,26) umfassen, wobei eine Position des zumindest einen ausgewählten elektronischen Bauelements (21,22,23,24,25,26) bei zumindest zwei unterschiedlichen Renderbildern unterschiedlich ist und die unterschiedlichen Renderbilder (45,46,47,48) basierend auf der in dem CAD-Modell (1) enthaltenen Beschreibung des wenigstens einen elektronischen Bauelements (21,22,23,24,25,26) und auf der in dem CAD-Modell (1) enthaltenen Koordinate des wenigstens einen elektronischen Bauelements zu labeln, wobei ein Label (5) des zumindest einen elektronischen Bauelements (21,22,23,24,25,26) eine Beschreibung des wenigstens einen elektronischen Bauelements und eine Position des wenigstens einen elektronischen Bauelements in dem Renderbild aufweist,
- eine zweite Schnittstelle (103), die dazu ausgebildet und konfiguriert ist, einen auf den unterschiedlichen gelabelten Renderbildern (49) basierten Trainingsdatensatz bereitzustellen.

7. Computerimplementiertes Verfahren zum Bereitstellen einer trainierten Funktion, wobei
- wenigstens ein gelabelter Trainingsdatensatz nach einem Verfahren nach einem der Ansprüche 1 bis 5 bereitgestellt wird,
- basierend auf dem wenigstens einen gelabelten Trainingsdatensatz eine Funktion trainiert wird, um eine trainierte Funktion zu erzeugen,
- die trainierte Funktion bereitgestellt wird.

8. Verfahren nach Anspruch 7, wobei die Funktion eine Klassifizierungs- und/oder eine Lokalisierungsfunktion ist, insbesondere auf einem Convolutional Neural Network basiert ist.

9. Computerimplementiertes Bilderkennungsverfahren, wobei
- Inputdaten bereitgestellt werden, wobei die Inputdaten eine Bildaufnahme (301) einer realen elektronischen Baugruppe sind, wobei die reale elektronische Baugruppe eine Vielzahl realer elektronischen Bauelemente umfasst,
- eine trainierte Funktion auf die Inputdaten angewandt wird, um Outputdaten (304) zu erzeugen, wobei die trainierte Funktion nach einem Verfahren nach Anspruch 7 oder 8 bereitgestellt wird, wobei die Outputdaten (304) eine Klassifizierung und/oder eine Lokalisierung (3040,3041, 3042,3043,3044,3045) wenigstens eines realen elektronischen Bauelements in den Inputdaten umfassen,
- die Outputdaten (304) bereitgestellt werden.

10. Verfahren nach Anspruch 9, wobei die Schritte des Verfahrens für mehrere unterschiedlichen Bildaufnahmen (301) wiederholt werden.

11. Verfahren nach Anspruch 9 oder 10, wobei die Outputdaten in Form einer verarbeiteten Bildaufnahme (304) bereitgestellt werden, wobei die verarbeitete Bildaufnahme (304) die Bildaufnahme (301) mit wenigstens einer Markierung (3040,3041, 3042,3043,3044,3045) des wenigstens einen realen elektronischen Bauelements ist.

12. Verfahren nach Anspruch 11, wobei die Markierung (3040, 3041,3042,3043,3044,3045) eine Koordinate des wenigstens einen elektronischen Bauelements und/oder eine Beschriftung (E0,E1,E2,E3,E4, E5) des wenigstens einen realen elektronischen Bauelements aufweist, und vorzugsweise in Form einer beispielsweise rechteckigen Umrandung, insbesondere in einer vorgebbaren Farbe visualisiert ist.

13. Verfahren nach einem der Ansprüche 9 bis 12, wobei die elektronische Baugruppe als eine Flachbaugruppe ausgebildet ist und die elektronischen Bauelemente als integrierte oder diskrete Bauelemente ausgebildet sind.

14. System umfassend eine Bildaufnahmevorrichtung (1102) und ein Datenverarbeitungssystem (300), wobei das Datenverarbeitungssystem (300) dazu ausgebildet und konfiguriert ist, ein Verfahren nach einem der Ansprüche 9 bis 13 auszuführen.

15. Computerprogramm, umfassend erste Befehle, die bewirken, dass ein System nach Anspruch 6 ein Verfahren nach einem der Ansprüche 1 bis 5 ausführt,
und/oder zweite Befehle, die bei der Ausführung des Programms durch einen Computer diesen veranlassen, ein Verfahren nach Anspruch 7 oder 8 auszuführen,
und/oder dritte Befehle, die bewirken, dass ein System nach Anspruch 14 ein Verfahren nach einem der Ansprüche 9 bis 13 ausführt.

## Claims

1. Computer-implemented method for providing a labelled training dataset, wherein
- at least one electronic component (21,22,23,24,25,26) is selected in a CAD model (1) of an electronic assembly (2) comprising a plurality of electronic components, wherein the CAD model (1) contains a description of the at least one electronic component (21,22,23,24,25,26) and a coordinate of the at least one electronic component, wherein the description of the electronic component includes information about the type of electronic component, and the coordinates of the electronic components are used to determine their positions in the electronic assembly (2),
- a plurality of different render images (45,46,47,48) are generated, wherein the different render images (45,46,47,48) include the at least one selected electronic component (21,22,23,24,25,26), wherein a position of the at least one selected electronic component (21,22,23,24,25,26) differs in the case of at least two different render images,
- the different render images are labelled based on the description of the at least one electronic component (21,22,23,24,25,26) contained in the CAD model (1) and on the coordinate of the at least one electronic component contained in the CAD model (1) in order to provide a training dataset based on the labelled render images (49), wherein a label (5) of the at least one electronic component (21,22,23,24,25,26) has a description of the at least one electronic component and a position of the at least one electronic component in the render image.

2. Method according to claim 1, wherein the label (5) is visualised in the form of a rectangular border, for example.

3. Method according to claim 1 or 2, wherein the electronic assembly is in the form of a printed circuit board assembly (2), wherein the electronic components (21,22,23,24,25,26) are in the form of integrated or discrete components.

4. Method according to one of claims 1 to 3, wherein the render images (45,46,47,48) of the at least one selected electronic component (21,22,23,24,25,26) differ from one another in at least one criterion, wherein the at least one criterion is selected from the group comprising: size of the at least one electronic component, illumination of the at least one electronic component, perspective of the at least one electronic component, background (3,31,32,33,34) of the at least one electronic component, position of the at least one electronic component, surface, texture, colour.

5. Method according to one of claims 1 to 4, wherein a number of electronic components (21,22,23,24,25,26) are selected in the CAD model (1), wherein the selected electronic components (21,22,23,24,25,26) can be associated with a process sequence.

6. System (100) for providing a labelled training dataset, comprising
- a computer-readable memory containing a CAD model (1) of an electronic assembly (2) comprising a plurality of electronic components, wherein the CAD model (1) includes a description of the at least one electronic component (21,22,23,24,25,26) and a coordinate of the at least one electronic component, wherein the description of the electronic component includes information about the type of electronic component and the coordinates of the electronic components are used to determine their positions in the electronic assembly,
- a first interface (102) configured and designed to enable at least one electronic component (21,22,23,24,25,26) to be selected in the CAD model (1),
- a computing unit (101) configured to generate a plurality of different render images (45,46,47,48), wherein the different render images (45,46,47,48) include the at least one selected electronic component (21,22,23,24,25,26), wherein a position of the at least one selected electronic component (21,22,23,24,25,26) differs in the case of at least two different render images, and to label the different render images (45,46,47,48) based on the description of the at least one electronic component (21,22,23,24,25,26) contained in the CAD model (1) and on the coordinate of the at least one electronic component contained in the CAD model (1), wherein a label (5) of the at least one electronic component (21,22,23,24,25,26) contains a description of the at least one electronic component and a position of the at least one electronic component in the render image,
- a second interface (103) designed and configured to provide a training dataset based on the different labelled render images (49).

7. Computer-implemented method for providing a trained function, wherein
- at least one labelled training dataset is provided according to a method according to one of claims 1 to 5,
- a function is trained based on the at least one labelled training dataset in order to produce a trained function,
- the trained function is provided.

8. Method according to claim 7, wherein the function is a classification function and/or a localisation function, in particular based on a convolutional neural network.

9. Computer-implemented image recognition method, wherein.
- input data is provided, wherein the input data is a captured image (301) of a real electronic assembly, wherein the real electronic assembly comprises a plurality of real electronic components,
- a trained function is applied to the input data to generate output data (304), wherein the trained function is provided according to a method according to claim 7 or 8, wherein the output data (304) comprises a classification and/or a localisation (3040,3041,3042,3043,3044,3045) of at least one real electronic component in the input data,
- the output data (304) is provided.

10. Method according to claim 9, wherein the steps of the method are repeated for a plurality of different captured images (301).

11. Method according to claim 9 or 10, wherein the output data is provided in the form of a processed captured image (304), wherein the processed captured image (304) is the captured image (301) with at least one marking (3040,3041,3042,3043,3044,3045) of the at least one real electronic component.

12. Method according to claim 11, wherein the marking (3040, 3041,3042,3043,3044,3045) includes a coordinate of the at least one electronic component and/or a label (E0,E1,E2,E3,E4,E5) of the at least one real electronic component, and is preferably visualised in the form of a rectangular border for example, in particular in a predefinable colour.

13. Method according to one of claims 9 to 12, wherein the electronic assembly is in the form of a printed circuit board assembly, and the electronic components are in the form of integrated or discrete components.

14. System comprising an image capture device (1102) and a data processing system (300), wherein the data processing system (300) is designed and configured to carry out a method according to one of claims 9 to 13.

15. Computer program, comprising first instructions that cause a system according to claim 6 to carry out a method according to one of claims 1 to 5,
and/or second instructions which, when the program is executed by a computer, cause the computer to carry out the method according to claim 7 or 8,
and/or third instructions that cause a system according to claim 14 to carry out a method according to one of claims 9 to 13.

## Revendications

1. Procédé mis en oeuvre par ordinateur pour disposer d'un ensemble de données d'apprentissage labélisé, dans lequel
- on choisit, dans un modèle (1) CAD d'un module (2) électronique comprenant une pluralité de composants électroniques, au moins un composant (21, 22, 23, 24, 25, 26) électronique, dans lequel le modèle (1) CAD comprend une description du au moins un composant (21, 22, 23, 24, 25, 26) électronique et une coordonnée du au moins un composant électronique, dans lequel la description du composant électronique comprend de l'information sur le type du composant électronique et, par les coordonnées des composants électroniques, leurs positions dans le module (2) électronique sont déterminées,
- on crée une pluralité d'images (45, 46, 47, 48) différentes de rendu, dans lequel les images (45, 46, 47, 48) différentes de rendu comprennent le au moins un composant (21, 22, 23, 24, 25, 26) électronique choisi, dans lequel une position du au moins un composant (21, 22, 23, 24, 25, 26) électronique choisi est différente dans au moins deux images différentes de rendu,
- on labélise les images différentes de rendu sur la base de la description, contenue dans le modèle (1) CAD, du au moins un composant (21, 22, 23, 24, 25, 26) électronique et sur la base de la coordonnée, contenue dans le modèle (1) CAD, du au moins un composant électronique, afin de disposer d'un ensemble de données d'apprentissage reposant sur les images (49) de rendu labélisées, dans lequel un label (5) du au moins un composant (21, 22, 23, 24, 25, 26) électronique comporte une description du au moins un composant électronique et une position du au moins un composant électronique dans l'image de rendu.

2. Procédé suivant la revendication 1, dans lequel le label (5) est visualisé sous la forme d'une bordure, par exemple rectangulaire.

3. Procédé suivant la revendication 1 ou 2, dans lequel le module électronique est constitué sous la forme d'un module (2) plat, dans lequel les composants (21, 22, 23, 24, 25, 26) électroniques sont constitués sous la forme de composants intégrés ou discrets.

4. Procédé suivant l'une des revendications 1 à 3, dans lequel les images (45, 46, 47, 48) de rendu du au moins un composant (21, 22, 23, 24, 25, 26) électronique choisi se distinguent les unes des autres par au moins un critère, dans lequel on choisit le au moins un critère dans le groupe : dimension du au moins un composant électronique, éclairage du au moins un composant électronique, perspective du au moins un composant électronique, arrière-plan (3, 31, 32, 33, 34) du au moins un composant électronique, position du au moins un composant électronique, surface, texture, couleur.

5. Procédé suivant l'une des revendications 1 à 4, dans lequel on choisit dans le modèle (1) CAD un nombre de composants (21, 22, 23, 24, 25, 26) électroniques, dans lequel les composants (21, 22, 23, 24, 25, 26) électroniques choisis peuvent être associés à une séquence de processus.

6. Système (100) de mise à disposition d'un ensemble de données d'apprentissage labélisé comprenant
- une mémoire, déchiffrable par ordinateur, comprenant un modèle (1) CAD d'un module (2) électronique comprenant une pluralité de composants électroniques, dans lequel le modèle (1) CAD comprend une description du au moins un composant (21, 22, 23, 24, 25, 26) électronique et une coordonnée du au moins un composant électronique, dans lequel la description du composant électronique comprend de l'information sur le type du composant électronique et, par les coordonnées des composants électroniques, leurs positions dans le module électronique sont déterminées,
- une première interface (102), qui est constituée et configurée pour permettre de choisir au moins un composant (21, 22, 23, 24, 25, 26) électronique dans le modèle (1) CAD,
- une unité (101) de calcul, qui est configurée pour produire une pluralité d'images (45, 46, 47, 48) différentes de rendu, dans lequel les images (45, 46, 47, 48) différentes de rendu comprennent le au moins un composant (21, 22, 23, 24, 25, 26) électronique choisi, dans lequel une position du au moins un composant (21, 22, 23, 24, 25, 26) électronique choisi est différente dans au moins deux images différentes de rendu et on labélise les images (45, 46, 47, 48) différentes de rendu sur la base de la description, contenue dans le modèle (1) CAD, du au moins un composant (21, 22, 23, 24, 25, 26) électronique et sur la base de la coordonnée, contenue dans le modèle (1) CAD, du au moins un composant électronique, afin de disposer d'un ensemble de données d'apprentissage reposant sur les images de rendu labélisées, dans lequel un label (5) du au moins un composant (21, 22, 23, 24, 25, 26) électronique comporte une description du au moins un composant électronique et une position du au moins un composant électronique dans l'image de rendu,
- une deuxième interface (103), qui est constituée et configurée pour disposer d'un ensemble de données d'apprentissage reposant sur les images (49) de rendu labélisées différentes.

7. Procédé mis en oeuvre par ordinateur pour disposer d'une fonction d'apprentissage, dans lequel
- on se procure au moins un ensemble de données d'apprentissage labélisé par un procédé suivant l'une des revendications 1 à 5,
- sur la base du au moins un ensemble de données d'apprentissage labélisé, on fait l'apprentissage d'une fonction pour produire une fonction d'apprentissage,
- on dispose de la fonction d'apprentissage.

8. Procédé suivant la revendication 7, dans lequel la fonction est une fonction de classement et/ou une fonction de localisation, reposant en particulier sur un réseau neuronal de convolution.

9. Procédé de détection d'image mis en oeuvre par ordinateur, dans lequel
- on se procure des données d'entrée, dans lequel les données d'entrée sont un enregistrement (301) d'image d'un module électronique réel, dans lequel le module électronique réel comprend une pluralité de composants électroniques réels,
- on applique une fonction d'apprentissage aux données d'entrée pour produire des données (304) de sortie, dans lequel on se procure la fonction d'apprentissage par un procédé suivant la revendication 7 ou 8, dans lequel les données (304) de sortie comprennent un classement et/ou une localisation (3040, 3041, 3042, 3043, 3044, 3045) d'au moins un composant électronique dans les données d'entrée,
- on dispose des données (304) de sortie.

10. Procédé suivant la revendication 9, dans lequel on répète les stades du procédé pour plusieurs enregistrements (301) d'image différents.

11. Procédé suivant la revendication 9 ou 10, dans lequel on dispose des données de sortie sous la forme d'un enregistrement (304) d'image traité, dans lequel l'enregistrement (304) d'image traité est l'enregistrement (301) d'image ayant au moins un repérage (3040, 3041, 3042, 3043, 3044, 3045) du au moins un composant électronique réel.

12. Procédé suivant la revendication 11, dans lequel le repérage (3040, 3041, 3042, 3043, 3044, 3045) a une coordonnée du au moins un composant électronique et/ou un marquage (E0, E1, E2, E3, E4, E5) du au moins un composant électronique réel et est visualisé, de préférence sous la forme d'une bordure, par exemple rectangulaire, en particulier dans une couleur pouvant être donnée à l'avance.

13. Procédé suivant l'une des revendications 9 à 12, dans lequel le module électronique est constitué sous la forme d'un module plat et les composants électroniques sont constitués sous la forme de composants intégrés ou discrets.

14. Système comprenant un dispositif (1102) d'enregistrement d'image et un système (300) de traitement de données, dans lequel le système (300) de traitement de données est constitué et configuré pour exécuter un procédé suivant l'une des revendications 9 à 13.

15. Programme d'ordinateur, comprenant des premières instructions, qui font qu'un système suivant la revendication 6 exécute un procédé suivant l'une des revendications 1 à 5,
et/ou des deuxièmes instructions, qui, à la réalisation du programme par un ordinateur, font que celui-ci exécute un procédé suivant la revendication 7 ou 8,
et/ou des troisièmes instructions, qui font qu'un système suivant la revendication 14 exécute un procédé suivant l'une des revendications 9 à 13.
